(19) Europäisches Patentamt / European Patent Office / Office européen des brevets

(11) **EP 2 957 404 B1**

(12) **EUROPEAN PATENT SPECIFICATION**

(45) Date of publication and mention of the grant of the patent:
**21.06.2017 Bulletin 2017/25**

(51) Int Cl.:
**B27K 3/16** *(2006.01)*    **B05D 7/08** *(2006.01)*
**C09D 7/12** *(2006.01)*    **C09D 5/32** *(2006.01)*
**C08K 3/00** *(2006.01)*    **C08K 3/22** *(2006.01)*

(21) Application number: **15001456.1**

(22) Date of filing: **19.12.2013**

(54) **METHOD OF WOOD SURFACE PROTECTION AGAINST LIGHT AND AGENT FOR IMPLEMENTATION OF THIS METHOD**

VERFAHREN ZUM HOLZOBERFLÄCHENSCHUTZ GEGEN LICHT UND MITTEL ZUR DURCHFÜHRUNG DIESES VERFAHRENS

PROCÉDÉ DE PROTECTION D'UNE SURFACE EN BOIS CONTRE LA LUMIÈRE ET AGENT POUR LA MISE EN OEUVRE DE CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(62) Document number(s) of the earlier application(s) in accordance with Art. 76 EPC:
**13460085.7 / 2 886 276**

(73) Proprietor: **Instytut Technologii Drewna**
**60-654 Poznan (PL)**

(72) Inventors:
• **Nowaczyk-Organista, Magdalena**
**61-153 Poznan (PL)**
• **Oleszek, Tomasz**
**62-028 Kozieglowy (PL)**
• **Pradzynski, Wlodzimierz**
**60-467 Poznan (PL)**
• **Krzoska-Adamczak, Zofia**
**61-376 Poznan (PL)**

(74) Representative: **Piatkowska, Elzbieta**
**Kancelaria Patentowa**
**Skorzewo, ul. Truskawkowa 12**
**60-185 Poznan (PL)**

(56) References cited:
DE-A1-102004 027 075    US-A- 4 883 689
US-A- 5 733 666    US-A1- 2002 022 682

**Description**

The subject of invention is method of wood surface protection against light and agent for implementation of this method, in particular transparent lacquer with addition of metal oxides.

Wood due to its decorative values is commonly used in furniture industry and indoor equipment industry in the form of solid boards or veneers. Colour and pattern of wood are significant elements having a bearing on the quality of offered products. Wood as a natural material is subject to many ageing processes caused by biotic and abiotic factors. One of the symptoms of wood ageing is colour change, which affects the aesthetics of wood products.

In indoor conditions, i.e. conditions found inside rooms behind window glass, light is the main factor influencing change of wood colour.

The colour of surface observed by human eye is a result of absorption, dispersion and reflection of electromagnetic radiation within the range of visible light against wood surface. Colour of wood, similarly to its chemical composition, depends on the species, age, and climatic zone from which the tree originates. The wood of domestic tree species is characterised by colour similar to white (e.g. maple), yellow (e.g. birch), brown (e.g. oak), red (e.g. sweet cherry), green (e.g. locust tree), and black (e.g. walnut). The wood of non-heartwood species is characterised by more or less even colour throughout the cross section. The only visible difference is that between brighter early wood and darker late wood. In the case of heartwood species a clear difference between darker heartwood and bright sapwood is visible on the cross section.

Chromophore groups present in wood absorb light well when exposed, especially for a long time, to UV and UV/VIS radiation, and initiate processes of photochemical degradation of wood surface, especially photo-oxidation of lignin compounds. As a result of photochemical reactions occurring on wood surface various colour effects are observed. For instance birch wood tends to darken; whilst walnut wood exposed to light brightens. Exposure of wood to light also results in change of chromatic components of colour, mainly due to photochemical changes in the structure of lignin, which in effect lead to yellowing of wood. The slightest changes are observed in the direction of the chromatic component of colour depicting the share of red within the colour of sample's surface.

Non-lacquered surface of wood is matt, porous and prone to getting dirty. It is also damaged easily due to environmental factors or human actions. Therefore, in order to improve the aesthetics and decorative values as well as protection of wooden elements, used in furniture industry and indoor equipment industry, against mechanical damage wood surface is protected with various types of lacquers. To preserve the natural look of wood surface transparent lacquers, both colour and colourless, are applied. Generally, pure resins contained in transparent lacquers cannot protect wood surface against light; therefore lacquer composition contains various absorbers of UV radiation.

Agents improving the stability of wood surface colour exposed to light generally can be divided into organic and inorganic absorbers. Organic absorbers encompass in particular benzophenones, benzotriazoles, triazines, oxanilides, and cyanoacrylates. Absorptive properties of these absorbers depend on the substituents found in these compounds. During their useful life organic UV absorbents degrade, which makes them less effective after some period of usage.

The second group of UV absorbers consists of inorganic compounds, mainly metal oxides, which are characterised by refraction coefficients that are much higher than those characterising polymers used as lacquer basis. Amongst inorganic metal oxides used in furniture industry as colour stabilisers one will find titanium(IV) oxide, cerium(IV) oxide, zinc oxide, and iron(III) oxide. The use of metal oxides whose particles are measured in nanometric scale makes it possible to keep lacquer coatings transparent, thanks to which the lacquer composition is suitable for finishing of wood surface and preserving the wood pattern at the same time. The use of lacquer products containing metal oxides whose particles' size exceeds nanometric scale results in creating of nontransparent lacquer coating.

It is known that inorganic UV absorbers on the basis of commonly used light zinc and titanium oxides, whose particles' size is measured in nanometric scale, are used. These lacquers effectively improve lightfastness of bright wood species, such as birch, which changes colour mainly due to exposure to UV light range. In the case of dark wood species use of zinc and titanium oxides, despite an improvement in surface lightfastness, generally results in blurring the wood pattern, which is considered a negative aesthetic effect in furniture industry. The larger the size of particles is, the greater the whitening of coatings is, i.e. the loss of wood pattern clarity. With the view of eliminating this negative effects, lacquers containing less oxides in the lacquer composition are used, which in turn results in lesser ability to stabilise the colour of finished furniture wooden element exposed to light.

Patent application no. US 2002/022682 A1 reveals organic-inorganic compositions based on epoxy-silica resin with addition of inorganic compounds and Lewis acids, forming hard transparent coatings generally intended for plastics such as PET, PEN, PVC, PMMA etc. The composition may be used on other surfaces such as glass, metal, and wood. Amongst the inorganic compounds the inventors list oxides of, inter alia, aluminium, cerium, yttrium, silicon, magnesium, titanium, iron, zirconium, and lanthanides, whose role is to enhance the resistance of lacquer coating to abrasion and scratching. In this method, in order to obtain a hard and durable coating, one should use Lewis acids as modifiers of the surface of inorganic compounds.

The inventors of the application mention that some of the compounds revealed in the application, i.e. titanium, cerium, iron, chromium, and vanadium oxides, also diffuse and absorb UV radiation, thanks to which the coating produced according to invention also protects from UV action. This is evidenced by lower coefficients of lacquer coating yellowing on a glass surface, which is an indicator of the delay in ageing processes of the lacquer coating. Protection against UV action is only fragmentary protection of wood against light, for also light within visible range causes changes of wood surface colour.

Patent application no. DE 10 2004 027075 A1 reveals transparent protective coatings based on TEOS (tetraethyl orthosilicate) with addition of polymethylacrylate as a substance improving the homogeneity of sol. The protective coating also contains organic UV absorbers with a high extinction coefficient and inorganic metal oxides (including $TiO_2$ ZnO, $ZrO_2$ and $Y_2O_3$, alkaline earth metals titanate or their mixture titanate) absorbing radiation in a narrow UV range. Coatings according to invention are used for the protection of glass surfaces and packaging foils against UV radiation; hence they are used for the protection of materials whose protective layer must be very thin. Increasing the thickness of layer coating containing the above-mentioned metal oxides, which is necessary in the case of wood protection, results in so-called whitening of lacquer coating and loss of wood pattern sharpness in most cases.

Patent no. US 5733666A reveals an agent for wood surface modification and a method of wood surface modification in order to reduce tannin-related colour change on water-dilutive acryl lacquer coatings (transparent or white). Minimization of the colour change due to wood modification with aqueous zirconyl acetate solution is a result of increased hydrophobicity of the surface, and decreased swelling and warping of wood. The solution of zirconyl acetate was supplemented with the following metal cations: Zn(II), Cu(II), Al(III), lanthanides, especially Ce(III) and Ce(IV) or their mixtures, in order to increase the wood surface resistance to factors conducive to occurrence of tannin-related colour changes caused by elevated humidity and temperature.

Patent no. US 4 883 689 A reveals an agent for wood impregnation and a method of wood impregnation in order to protect wood from degradation caused by fungi, insects, bacteria, fire, and atmospheric factors conducive to biological decomposition of wood. The impregnating agent is a solution of lanthanide derivatives soluble in organic solvents or a colloidal dispersion of cerium oxides or carbonates.

Application of impregnation according to invention suggests bonding of lanthanides with wood, which is confirmed by higher values of ash content in impregnated wood after leaching the wood with water; hence this method only protects wood from factors such as water and elevated humidity, which are conducive to the growth of, inter alia, decaying and mould fungi.

Organic and inorganic UV absorbers available on the market are characterised by different effectiveness of protection of finished wooden elements against light. This effectiveness depends on the wood species coated with lacquer. The same composition absorber-lacquer applied on various wood species can bring diametrically opposed results, for instance in the case of one wood species it improves the finished surface lightfastness; whilst in the case of the other species it lowers lightfastness. The effectiveness of wood protection against light depends inter alia on factors such as the type of lacquer product, the type of light projected onto the surface finished with transparent lacquer, and time of exposure to light. Therefore, proper selection of absorber, taking into consideration the lacquer and wood species, is very important in order to obtain satisfying effect for given irradiation parameters.

The goal of invention was to develop method of wood surface protection against light, where at the same time a clear wood surface pattern would be preserved, as well as to develop agent for implementation of the method.

In the process of research on the improvement of wood surface lightfastness it was unexpectedly found that lanthanides oxides and yttrium oxide effectively protect wood surface against light.

The subject of invention is method of wood surface protection against light consisting in application onto wood surface of metal oxides selected from the group: praseodymium(III) oxide, praseodymium(IV) oxide, neodymium(III) oxide, yttrium oxide, erbium oxide or their mixtures or combinations. Mixtures are understood as mixtures of oxides, and combinations are understood as a multi-layer system in which a single layer contains only one oxide and the second or consecutive oxide is contained in the second or consecutive layer. Oxides are applied onto wood surface as a component of lacquers or as a component of impregnating composition and component of lacquers.

The method according to invention consists in application onto wood surface of lanthanides oxides or yttrium oxide, and then application of transparent lacquer containing lanthanides oxides or yttrium oxide.

At the first stage an impregnating composition composed of water or organic solvent, favourably dipropylene glycol monomethyl ether, and at least one lanthanide oxide selected from the group: praseodymium(III) oxide, praseodymium(IV) oxide, neodymium(III) oxide, erbium oxide or yttrium oxide, is applied onto wood surface. The impregnating composition contains oxide in an amount of 5-20 weight percent in relation to the solvent, favourably 10%. The impregnating composition is applied by a freely chosen method. Once the impregnant is applied, wooden elements are dried at a temperature not exceeding 30°C in order to remove solvent from wood. The impregnant is applied onto wood surface in an amount corresponding to the content of lanthanide oxide or yttrium oxide ranging from 0.2 to 5.0 $g/m^2$. Favourably lanthanide oxide or yttrium oxide should be applied onto wood surface in an amount ranging from 0.4 to 4.0 $g/m^2$, and most favourably in an amount ranging from 1.0 to 2.0 $g/m^2$.

At the second stage wood surface impregnated at the first stage and dry, according to organoleptic assessment, is coated with transparent lacquer, most favourably with water-dilutable one on the basis of acrylic resins, containing addition of lanthanide oxide selected from the group: praseodymium(III) oxide, praseodymium(IV) oxide, neodymium(III) oxide, erbium oxide or yttrium oxide or their mixture, or combination of oxides in particular lacquer layers.

Lacquer can be applied as a single layer; however it is favourable to apply several layers, of which at least one contains metal oxides. Surface protected with lacquer containing metal oxides can be considered a finished product, but it can also be considered a basis for other lacquer coatings in order to give finished product not only lightfastness, but also other properties such as: increased resistance to mechanical factors, especially to abrasion, impact, and scratching.

The method according to this variant of invention envisages application of an impregnating composition and lacquers onto the surface of wood, which is to be protected, in such an amount that the total amount of lanthanide oxides and/or yttrium oxide ranges from 0.5 to 4.0 g/m$^2$, favourably from 1.0 to 2.0 g/m$^2$.

In the method according to invention lanthanides oxides or yttrium oxide are used after they have been comminuted to nanoparticles of a size not exceeding 100 nm, favourably smaller than 50 nm, and most favourably smaller than 30 nm.

In order to effectively perform the lacquering process (application of lacquer onto wood surface) it is favourable to use lacquers containing from 0.5 to 6.0 weight percent, favourably 2.0-4.0 weight percent, of lanthanide or yttrium oxide converted into lacquer dry mass. The content of oxides in lacquer is selected in such a way that after lacquer application the assumed amount of oxides per 1 m$^2$ is obtained, i.e. in an amount ranging from 0.5 to 4.0 g/m$^2$, favourably from 1.0 to 2.0 g/m$^2$.

Wood surfaces protected using the method according to invention are characterised by lightfastness which is higher than or similar to that of elements finished with lacquers containing UV absorbers on the basis of inorganic compounds such as titanium and zinc oxides. An additional value lies in the fact that thanks to use of oxides according to invention the effect of coating whitening can be minimised, which is especially important in the case of dark wood species. Use of the newly developed method of wood protection against light makes it possible to obtain finished surface characterised by a clear wood pattern, which undoubtedly is an important factor when it comes to assessment of the aesthetics of furniture surface finishing.

The examples present evidence confirming the effectiveness of the method of protection of wood surface against light using the method according to invention.

The colour of the tested surfaces prior to and after irradiation was measured using a spectrophotometer ELREPHO 2000 and colour co-ordinates were recorded in the CIE Lab system. The measurements were performed according to the ISO 7724:1984 standard: Paints and varnishes

- Colorimetry, Part 1: Principles, Part 2: Colour measurement, Part 3: Calculation of colour differences.

The calculations were based on the following formula (also referred to in ISO 7724 standard):

$$\Delta E^* = \sqrt{(\Delta L^*)^2 + (\Delta a^*)^2 + (\Delta b^*)^2}$$

The colour sphere ($L^*$, $a^*$, $b^*$) is described as a tridimensional system of colour co-ordinates (axes L*, a*, and b*). Axis a* depicts the share of green or red colour within the analysed colour; whilst hues of green take on negative values, and hues of red positive values. Axis b* depicts the share of blue or yellow colour within the analysed colour; whilst hues of blue take on negative values, and hues of yellow positive values. Axis L* describes colour brightness within the value range from 0 to 100. L*=100 means that a given colour is close to white, and L*=0 that a colour is close to black.

A change in brightness ΔL* takes on a negative value when due to irradiation the tested sample darkened. On the other hand, when the sample brightened, ΔL* takes on a positive value.

Generally, wood surface colour is described by positive values of chromatic components of colour a* and b*. Hence, in the discussed examples, a negative value of change of chromatic co-ordinate Δa* means that due to irradiation the tested sample is less red. On the other hand, when the sample is more red, then Δa* takes on a positive value. The situation is similar in the case of component Δb* difference.

Colour measurement parameters:

- spectrophotometer ELREPHO 2000,
- light source D65,
- geometry d/10°

- number of samples 3-6
- number of measurement points on one sample - 6

However, it should be kept in mind that identical measurements for identically prepared samples of the same wood species may differ to some degree in the case the wood originated from a different tree or production technologies used to obtain veneer prior to the tests differed.

<u>**Veneer used for testing:**</u>

**D1** - Sweet cherry veneer (*Prunus avium* L.) of the thickness of 0.9 mm, produced by slicing method.

Tables 1 and 2 give the characteristics of the veneer used.

Table 1

| Origin and conditions of wood creation | | | | |
|---|---|---|---|---|
| Veneer | Region of origin: nature and forestry region | Estimated tree age [years] | Cooking conditions | Humidity [%] |
|  |  |  |  |  |
| D1 | Central Poland Upland Region Roztocze Region | 60-80 | 36h, 60 °C | 7.2-8.4 |

Table 2

| Colour co-ordinates before testing | | | |
|---|---|---|---|
| Veneer characteristics | | Wood specimen | |
| | | | D1 |
| Colour co-ordinates*) | L* min max | | 68.96 67.41 70.04 |
| | a* min max | | 10.7 9.3 12 |
| | b* min max | | 20.8 19.1 22.1 |
| *) mean value from 20 measurement points | | | |

<u>**Impregnating composition:**</u>

I1 - dipropylene glycol monomethyl ether CAS:34590-94-8 and 10% of Praseodymium Oxide 4451RE by NanoAmor Company,

The impregnating composition was prepared in an ultrasonic homogeniser SONICS VCX 500. Parameters of ultrasonic homogenisation: time: 20 min., temp. max 40°C, impulse length 3 sec., interval length 2 sec., amplitude 70%, standard tip 3/4".

<u>**Lacquer compositions:**</u>

The amounts of oxides are given converted into dry mass.

**Lacquer 1** - lacquer EA 635, by Sherwin Williams Company

**Lacquer 2 -** lacquer EA 635+ 2% $TiO_2$ - Titanium Oxide 5480MR by NanoAmor Company

**Lacquer 3-** lacquer EA 635+ 2% $Pr_6O_{11}$ - Praseodymium Oxide 4451RE by NanoAmor Company

**Lacquer 4 -** lacquer EA635 + 2% $Nd_2O_3$ - Neodymium Oxide 3911RE by NanoAmor Company Lacquer preparation procedure (lacquers 2-4).

At the first stage a masterbatch containing wetting agent (Anti[®]-Terra 250 by BYK Chemie GmbH) and a proper amount of lanthanide oxide or titanium oxide was prepared. The wetting agent was used in a proportion to lanthanide oxide or titanium oxide in a proportion of 10:1. The composition was prepared in a homogeniser IKA T25 digital Ultra Turrax, tip S 25N-10G at a velocity of 3200-20000 rotations/min.
At the second stage a proper amount of lacquer EA 635, by Sherwin Williams Company, was homogenised with a proper amount of the masterbatch in an ultrasonic homogeniser SONICS VCX 500. Parameters of ultrasonic homogenisation - SONICS - times: 20 min, temp. max 40°C, impulse length 3 sec., interval length 2 sec., amplitude 70%, standard tip 3/4".

Example 1

A. Impregnation

Impregnating composition I1 was applied using a brush onto the surface of veneer D1. Then it was dried at the temperature of 30 °C (dryer without air circulation). Once ether was evaporated, the content of oxide on the wood surface was 1.0 g/m$^2$. So prepared veneer was stuck on a MDF of the thickness of 3 mm.

B. Lacquering

Dried (organoleptic assessment) sample of impregnated veneer D1 was lacquered. Four layers of lacquer 1 were applied consecutively.
Drying of individual lacquer layers - 70°C for 10 minutes in a dryer with air circulation, and then at the temperature of 20° until absolutely dry, which is determined by organoleptic method. Results of measurements are given in chart 1 and table 3.

Example 2

Four layers of lacquer were consecutively applied on veneer impregnated as in example 1A:

- first layer - lacquer 1,
- second and third layer - lacquer 2 containing in total 1.0 g/m$^2$ of metal oxide,
- fourth layer - lacquer 1.

Individual layers were dried as per example 1B.
Results of measurements are given in chart 1 and table 3.

Example 3

Four layers of lacquer were consecutively applied on veneer impregnated as in example 1A:

- first layer - lacquer 1,
- second and third layer - lacquer 3 containing in total 1.0 g/m$^2$ of metal oxide,
- fourth layer - lacquer 1.

Individual layers were dried as per example 1B.
Results of measurements are given in chart land table 3

Example 4

Four layers of lacquer were consecutively applied on veneer impregnated as in example 1A:

- first layer - lacquer 1,

- second layer - lacquer 3 containing 0.5 $g/m^2$ of metal oxide,
- third layer - lacquer 2 containing 0.5 $g/m^2$ of metal oxide,
- fourth layer - lacquer 1.

Individual layers were dried as per example 1B.
Results of measurements are given in chart 1 and table 3.

Example 5

Four layers of lacquer were consecutively applied on veneer impregnated as in example 1A:

- first layer - lacquer 1,
- second layer - lacquer 3 containing 0.5 $g/m^2$ of metal oxide,
- third layer - lacquer 4 containing 0.5 $g/m^2$ of metal oxide,
- fourth layer - lacquer 1.

Individual layers were dried as per example 1B.
Results of measurements are given in chart land table 3.

Example 6

Four layers of lacquer 1 were applied onto the surface of sample D1.
Individual layers were dried as per example 1B.
Results of measurements are given in table 3. Table 3 presents comparative data for samples as per examples 1-6 irradiated with a xenon lamp of wave range 320-800 nm and light intensity 550 $W/m^2$, temp. BST 45°C, irradiation time 100 h. The lightfastness was assessed prior to the action and consecutively after 1, 5, 25, 50, 75, and 100 h of irradiation.
Data given in table 3 suggests that impregnated wood coated with clear lacquer (example 1) is characterised by higher resistance to colour change (lesser changes of $\Delta E^*$ values) compared to non-impregnated wood coated with clear lacquer (example 6).
Results for examples 2-5confirm that the change of wood colour is lesser in the case of impregnated wood coated with lacquers with additions of metal oxides compared to impregnated wood coated with clear lacquer (example 1). Lesser changes of $\Delta E^*$ values result mainly from lesser changes of brightness ($\Delta L^*$).
Amongst the impregnated sweet cherry wood samples, which were then protected with various lacquer compositions, the highest resistance to light (the least values of colour changes $\Delta E^*$) was observed in the case of wood protected with praseodymium oxide (example 3). The samples (example 4) of impregnated wood coated with lacquer composition, where in one layer lacquer containing praseodymium oxide (lacquer 3) and in the other lacquer containing titanium oxide (lacquer 2) was used, were characterised by lower lightfastness compared to example 3.
Similar results were obtained in the case, where lacquer containing titanium oxide (example 5) was substituted with lacquer containing neodymium oxide (lacquer 4); however, in this case, despite the comparable protection against light, one obtains a better visual effect, for coating without titanium oxide is more transparent.

Table 3

| Time of exposure to light [h] | Example 1 | | | | Example 2 | | | | Example 3 | | | |
|---|---|---|---|---|---|---|---|---|---|---|---|---|
| | $\Delta L^*$ | $\Delta a^*$ | $\Delta b^*$ | $\Delta E^*$ | $\Delta L^*$ | $\Delta a^*$ | $\Delta b^*$ | $\Delta E^*$ | $\Delta L^*$ | $\Delta a^*$ | $\Delta b^*$ | $\Delta E^*$ |
| 0 | 0.00 | 0.00 | 0.00 | 0.00 | 0.00 | 0.00 | 0.00 | 0.00 | 0.00 | 0.00 | 0.00 | 0.00 |
| 1 | -1.29 | -0.60 | -1.40 | 2.00 | -0.83 | -0.53 | -0.77 | 1.25 | -0.28 | -0.30 | -0.27 | 0.52 |
| 5 | -1.15 | -0.53 | -1.03 | 1.64 | -0.73 | -0.57 | -0.77 | 1.22 | -0.12 | -0.43 | -0.07 | 0.50 |
| 25 | 0.80 | -1.03 | -0.83 | 1.55 | 0.54 | -0.70 | -1.17 | 1.47 | 0.45 | -0.47 | 0.27 | 0.70 |
| 50 | 2.82 | -1.50 | -0.60 | 3.25 | 1.97 | -0.93 | -1.13 | 2.46 | 0.92 | -0.37 | 0.53 | 1.13 |
| 75 | 4.20 | -1.93 | -0.83 | 4.70 | 2.98 | -1.17 | -1.17 | 3.41 | 1.31 | -0.30 | 0.53 | 1.45 |
| 100 | 5.32 | -2.13 | -0.93 | 5.81 | 3.83 | -1.33 | -1.20 | 4.23 | 1.69 | -0.30 | 0.73 | 1.89 |

| Time of exposure to light [h] | Example 4 | | | | Example 5 | | | | Example 6 | | | |
|---|---|---|---|---|---|---|---|---|---|---|---|---|
| | $\Delta L^*$ | $\Delta a^*$ | $\Delta b^*$ | $\Delta E^*$ | $\Delta L^*$ | $\Delta a^*$ | $\Delta b^*$ | $\Delta E^*$ | $\Delta L^*$ | $\Delta a^*$ | $\Delta b^*$ | $\Delta E^*$ |
| 0 | 0.00 | 0.00 | 0.00 | 0.00 | 0.00 | 0.00 | 0.00 | 0.00 | 0.00 | 0.00 | 0.00 | 0.00 |
| 1 | -0.54 | -0.50 | -0.77 | 1.06 | -0.48 | -0.30 | -0.43 | 0.71 | -1.54 | -0.10 | -1.80 | 2.37 |
| 5 | -0.53 | -0.53 | -0.67 | 1.01 | -0.16 | -0.40 | -0.30 | 0.62 | -1.32 | 0.17 | -1.87 | 2.30 |
| 25 | 0.36 | -0.43 | -0.77 | 0.96 | 0.76 | -0.47 | -0.10 | 0.91 | 1.01 | -0.30 | -0.87 | 1.38 |
| 50 | 1.30 | -0.47 | -0.77 | 1.59 | 1.67 | -0.47 | 0.07 | 1.74 | 3.71 | -0.83 | -0.50 | 3.84 |
| 75 | 2.12 | -0.60 | -0.53 | 2.29 | 2.26 | -0.57 | 0.03 | 2.34 | 5.72 | -1.30 | -0.20 | 5.87 |
| 100 | 2.71 | -0.57 | -0.50 | 2.82 | 2.87 | -0.67 | 0.17 | 2.95 | 7.38 | -1.67 | -0.03 | 7.57 |

**Claims**

1. Method of wood surface protection against light, **characterised in that** an impregnating mixture containing solvent and yttrium oxide or lanthanide oxide selected from the group: praseodymium(III) oxide, praseodymium(IV) oxide, neodymium(III) oxide, erbium oxide or their mixtures, is applied onto wood surface and then, once the impregnated surface has been dried, it is coated with a layer of transparent lacquer, favourably water-dilutable, containing addition of yttrium oxide or lanthanide oxide selected from the group: praseodymium(III) oxide, praseodymium(IV) oxide, neodymium(III) oxide, erbium oxide or their mixture, or combination of oxides in particular lacquer layers, whilst oxides are used in the form of nanoparticles.

2. Method according to claim 1, **characterised in that** oxides are applied in total amount, in impregnant and lacquer or lacquers, corresponding to the content of lanthanide oxide from 0.2 to 5.0 g/m$^2$.

3. Method according to claim 2, **characterised in that** oxides are applied in an amount corresponding to the content of lanthanide oxide from 0.4 to 4.0 g/m$^2$.

4. Method according to claim 3, **characterised in that** oxides are applied in an amount corresponding to the content of lanthanide oxide from 1.0 to 2.0 g/m$^2$.

**Patentansprüche**

1. Verfahren zum Holzschutz gegen Licht, **dadurch gekennzeichnet, dass** eine Imprägniermischung Lösungsmittel und Yttriumoxid oder Lanthanidoxid ausgewählt aus der Gruppe: Praseodym (III) -oxid, Praseodym (IV) -oxid, Neodym (III] -oxid, Erbiumoxid oder deren Mischungen enthaltende, auf die Holzoberfläche aufgetragen wird und dann, sobald die imprägnierte Oberfläche getrocknet ist, mit einer Schicht aus einem transparenten Lack, vorteilhaft mit Wasser verdünnbaren, die Zusatz von Yttriumoxid oder Lanthanidoxid enthaltende, ausgewählt aus der Gruppe: Praseodym (III) -oxid, praseodymiuin (IV) -oxid, Neodym (III) -oxid, Erbiumoxid oder deren Mischung, oder eine Kombination von Oxiden, insbesondere Lackschichten beschichtet wird, während die Oxide in Form von Nanopartikeln verwendet werden.

2. Verfahren nach Anspruch 1, **dadurch gekennzeichnet, dass** Oxide in einer Gesamtmenge, in Imprägniermittel und Lack oder Lacke, entsprechend dem Gehalt an Lanthanidoxid, von 0,2 bis 5,0 g/m$^2$ aufgebracht werden.

3. Verfahren nach Anspruch 2, **dadurch gekennzeichnet, dass** Oxide in einer Menge, entsprechend dem Gehalt an Lanthanidoxid, von 0,4 bis 4,0 g/m$^2$ aufgebracht werden.

4. Verfahren nach Anspruch 3, **dadurch gekennzeichnet, dass** Oxide in einer Menge, entsprechend dem Gehalt an Lanthanidoxid, von 1,0 bis 2,0 g/m$^2$ aufgebracht werden.

**Revendications**

1. Le moyen de protéger la surface de bois contre la lumière **se caractérisant en ce qu'**il consiste à appliquer à la surface de bois un mélange d'imprégnation contenant un solvant et l'oxyde d'yttrium ou l'oxyde de lathanide sélectionné du groupe : oxyde de praséodyme(III), oxyde de praséodyme(IV), oxyde de néodyme(III), oxyde d'erbium ou leur mélange et ensuite, après le séchage, à la surface traitée est appliquée une couche de vernis transparent, de preference hydrodiluable, contenant une addition d'oxyde d'yttrium ou d'oxyde lathanide sélectionné du groups : oxyde de praséodyme(III), oxyde de praséodyme(IV), oxyde de néodyme(III), oxyde d'erbium ou leur mélange ou une combinaison d'oxydes dans les couches de vernis particulières et les oxydes sont appliqués sous forme de nanoparticules.

2. Le moyen selon la revendication 1 **se caractérisant en ce que** les oxydes sont appliqués en quantité totale, dans le produit d'imprégnation et le vernis ou les vernis, correspondant à la teneur en oxyde de lanthanide de 0,2 à 5,0 g/m$^2$.

3. Le moyen selon la revendication 2 **se caractérisant en ce que** les oxydes sont appliqués en quantité correspondant à la teneur en oxyde de lathanide 0,4 à 4 g/m$^2$.

4. Le moyen selon la revendication 3 **se caractérisant en ce que** les oxydes sont appliqués en quantité correspondant à la teneur en oxyde de lathanide 1,0 à 2,0 g/m$^2$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002022682 A1
- DE 102004027075 A1
- US 5733666 A
- US 4883689 A